# EUROPÄISCHE PATENTSCHRIFT

(11) **EP 1 806 045 B1**
(45) Veröffentlichungstag und Bekanntmachung des Hinweises auf die Patenterteilung: **14.04.2010**
(21) Anmeldenummer: 06122377.2
(22) Anmeldetag: 16.10.2006
(51) Int. Cl.: A01D 41/127, B60K 26/02, G05G 5/03, A01B 71/02

(54) **Steuerungssystem mit einem Stellmittel zur Änderung eines kinematischen Parameters einer Antriebseinheit einer selbstfahrenden Landmaschine**
Control system with an actuator for changing a cinematic parameter of a drive unit of a self-propelled agricultural machine
Système de commande avec un organe de manoeuvre pour le changement d'un paramètre cinématique d'une unité d'entraînement d'un véhicule agricole autopropulsé

(30) Priorität: 04.01.2006 DE 102006000876
(43) Veröffentlichungstag der Anmeldung: 11.07.2007
(73) Patentinhaber: CLAAS Selbstfahrende Erntemaschinen GmbH, 33428 Harsewinkel (DE)
(72) Erfinder: Deppe, Markus, 32107, Bad Salzuflen (DE)
(74) Vertreter: Ellerbrächter, Dirk

(56) Entgegenhaltungen:
- DE-A1- 3 232 160
- GB-A- 2 114 717
- US-A- 4 800 721

## Beschreibung

Steuerungssystem mit einem Stellmittel zur Änderung eines kinematischen Parameters einer Antriebseinheit einer selbstfahrenden Landmaschine

Die Bedienung, beziehungsweise das Steuern der Antriebseinrichtungen von beispielsweise selbstfahrenden Landmaschinen erfolgt durch Steuerungssysteme, die Stellmittel enthalten. Stellmittel können aus sogenannten Fahrhebeln oder Multifunktionshebeln gebildet sein, mit denen der Fahrbetrieb beziehungsweise die Geschwindigkeit der Vorfahrt- oder Rückwärtsfahrt der Fahrzeuge durch das beispielsweise Vor- oder Zurückschieben des Fahrhebels gesteuert wird. Das Verfahren beruht darauf, dass durch eine beliebige Auslenkung des Stellmittels die Antriebseinheit über eine speicherprogrammierbare Steuerung den Vorgaben des Stellmittels folgt. Das heißt, dass die von dem am Stellmittel angeordneten, von mindestens einem Sensor ermittelten Informationen, gewandelt und den in der Steuerung gespeicherten Parametern der Leistungskurve zugeführt werden, Um einen bestimmte Prozesszustand zu erreichen, wird die Antriebseinheit durch die Verarbeitung der Informationen in der Steuerung über ein Stellglied so in Gang gesetzt oder angehalten, dass ein Fahrvorgang oder ein Fahrstopp des Fahrzeuges entsteht. Die Prozesszustandsänderung erfolgt über den von der Steuerung ermittelten kinematischen Parameter des Stellgliedes. Die Folge der Änderung des kinematischen Parameters ist eine Änderung der Stellgröße und hat eine Leistungsänderung über die Änderung der Motordrehzahl an der Antriebseinheit zur Folge.

Dieses aus dem Stand der Technik bekannte Antriebs- und Steuerungssystem hat den Nachteil, dass die Änderung des Stellmittels eine Änderung des kinematischen Parameters der Antriebseinheit nach sich zieht, die für den Bediener der selbstfahrenden Landmaschine nicht spürbar nachvollziehbar ist. Da er nicht nachprüfen kann, inwieweit die an dem Stellmittel vorgewählte Einstellung von der Antriebseinheit erreicht wird oder erreicht werden kann.

Aus der DE 100 25 492 ist ein Verfahren und eine Vorrichtung zur Rückmeldung des aktuellen Fahrzustandes eines Fahrzeuges an den Fahrer bekannt. Die im Fahrzeug vorgesehenen Fahrsystemeinrichtungen erzeugen Ausgangssignale in Abhängigkeit von ermittelten Fahrzustandsgrößen. Die Ausgangssignale werden in einer Koordinationseinrichtung zusammengeführt, die in Abhängigkeit von den Signalen Rückmeldesignale erzeugt. Die Rückmeldesignale werden dann einer Rückmeldeanordnung zugeführt, die dann abhängig vom Rückmeldesignal eine dem Fahrer vermittelnde optische, akustische und/oder haptische Fahrerrückmeldung hervorruft, die an die handbaren Bedienelemente Rückmeldekräfte beziehungsweise Rückmeldemomente vermittelt Dieses System beruht darauf, dass, wenn Grenzwerte der Fahrzustandsgrößen überschritten werden, automatisch in den Fahrbetrieb eingegriffen wird oder dem Fahrer zum Eingriff in den Fahrbetrieb entsprechende Rückmeldungen auf geeigneten Anzeigeeinrichtungen geliefert werden,

Nachteilig bei den genannten Eingabegeräten/Bedienelementen ist, dass der Bediener keine Rückmeldung über die mögliche Verstellgeschwindigkeit des durch den Bedienhebel einzustellenden Systems erhält, oder nicht nachvollziehen kann, ob die vorgewählte Einstellung von der Antriebseinrichtung überhaupt erreicht wird oder erreicht werden kann.

Der Erfindung liegt daher die Aufgabe zugrunde, ein Stellmittel zur Änderung eines kinematischen Parameters der eingangs genannten Art zu schaffen, welches die genannten Nachteile der bekannten Anordnungen aus dem Stand der Technik vermeidet und welches dem Bediener eine ständige haptische Rückmeldung durch eine auf das Stellglied aufgebrachte Kraft liefert.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen.

Um ein mit diesen Merkmalen der vorliegenden Erfindung ausgestattetes Steuerungssystem zu schaffen, wird erfindungsgemäß vorgeschlagen, das die Verstellbarkeit des Stellmittels an das Beschieunigungsverhalten der Antriebseinheit gekoppelt ist, so dass eine kontinuierliche haptische Rückmeldung am Stellmittel erzeugt wird, um die fehlende direkte mechanische Kraftübertragung zwischen dem Stellmittel und der Antriebseinheit zu ersetzen. Als haptische Wahrnehmung wird die Sinneswahrnehmung des Bedieners, mit der bestimmte mechanische Reize wahrgenommen werden können, bezeichnet. Die haptische Wahrnehmung erlaubt es dem Bediener, Druck zu bewerten. Diese Eigenschaft der haptischen Wahrnehmung wird technologisch genutzt und aus dem Steuerungssystem eine mechanische Rückmeldung generiert, die als Kraft am Stellmittel wirkt, Das Stellmittel ist dazu mit einer Aktuatoreinheit ausgestattet, der ein Signal von der Steuerungseinheit zugeführt wird, das so verstaut wird, dass die Aktuatoreinheit Kraft auf das Stellmittel ausüben kann. Das bedeutet, das Signal beziehungsweise die Antriebsenergie trägt die Information, welche die Steuerungseinheit ausgibt, während die mechanische Energie, beziehungsweise die Kraft (Druckkraft), welche die Aktuatoreinheit erzeugt, dem Prozesszweck dient. Damit die Steuerungseinheit entscheiden kann, ob die Aktuatoreinheit am Stellmittel Druck erzeugen soll oder nicht, benötigt die Steuerungseinheit die Information eines Sensors über die Wegänderung des Stellmittels, beispielsweise eines Wegaufnehmers, vorzugsweise eines Drehwinkelsensors. Die durch die Betätigung des Bedieners hervorgerufene Auslenkung des Stellmittels wird durch den Drehwinkelsensor gemessen, der ein entsprechendes Signal erzeugt und der Steuerungseinheit zuführt. D.h., dass der im Regelkreis angeordnete Sensor die Wegänderung des Stellmittels in eine Information wandelt und diese an die Steuerungseinheit übermittelt. Das vom Stellmittel generierte Signal wird dem Eingabeteil der Steuerungseinheit zugeführt Die Steuerungseinheit liest dann die Eingangsdaten in den Verarbeitungsteil ein und führt das gespeicherte Programm beziehungsweise die gespeicherten Programme aus. Ein gespeichertes Programm enthält vorzugsweise die Kennlinie der Antriebseinheit, die das Beschleunigungsverhalten der jeweiligen Antriebseinheit entsprechend der Leistung, beziehungsweise dem Drehmoment und der Drehzahl beinhaltet. Die Eingangsdaten der Auslenkung des Stellmittels werden der Kennlinie zugeordnet und eine Sollgröße des kinematischen Parameters für die Antriebseinheit ermittelt, wobei die Kennlinie das Beschleunigungsverhalten der Antriebseinheit berücksichtigt Das Beschleunigungsverhalten der Antriebseinheit wird durch dessen Elastizität bestimmt. Die Elastizität der Antriebseinheit wird durch verschiedene Kriterien, wie beispielsweise der Anzahl der Zylinder, den Hubraum, der Leistung des Motors, um nur einige zu nennen, bestimmt.
Die ermittelte Sollgröße des kinematischen Parameters, welche ein Drehzahlsignal darstellt, wird einerseits über das Ausgabeteil dem Stellglied, vorzugsweise einem elektronischen Stellglied, der Antriebseinheit als Eingangssignal zur Verfügung gestellt. Das Eingangssignal ist die Stellgröße am Ausgang des Steuerungssystems. Mit dem Ausgangssignal des Stellgliedes wird die Drehzahl der Antriebseinheit an die gewünschte Fahrgeschwindigkeit angepasst. Andererseits wird der ermittelten Sollgroße des kinematischen Parameters ein zugehöriger, aus der Kennlinie vorgegebener Aktuatorkraftwert zugeordnet. D.h., die Steuerungseinheit generiert, abhängig von dem in der Kennlinie, die der Leistungskurve der Antriebseinheit entspricht, einen vorgegebenen Aktuatorkraftwert als Kraftsignal, weiches an wenigstens eine Aktuatoreinheit übermittelt wird. Die Aktuatoreinheit übt, abhängig vom Kraftsignal, eine Kraft auf das Stellmittel aus, die der Auslenkung des Stellmittels durch den Bediener entgegen gerichtet ist.
Die zusätzlich durch die Aktuatoreinheit auf das Stellmittel aufgebrachte Kraft bewirkt, dass der Bediener das Stellmittel nur insoweit auslenken kann, bis das Stellmittel der tatsächlichen Änderung der Drehzahländerung der Antriebseinheit gefolgt ist, die durch das Beschleunigungsverhalten der Antriebseinheit bestimmt wird. Hat die Antriebseinheit die vorgegebene Drehzahl noch nicht erreicht, lässt sich das Stellmittel nicht weiter in Richtung einer höheren Leistung der Antriebseinheit auslenken, verschieben beziehungsweise bewegen. Erst wenn die Antriebseinheit die vorgegebene Leistung erreicht hat ist eine weitere Auslenkung beziehungsweise Bewegung des Stellmittels zum Abruf einer größeren Leistung der Antriebseinheit möglich, wodurch die Lebensdauer der Antriebseinheit erhöht wird, Durch die Aktuatoreinheit ist die Auslenkung des Stellmittels mit dem Elastizitätsbeziehungsweise dem Beschleunigungsverhalten der Antriebseinheit gekoppelt und die von der Aktuatoreinheit auf das Stellmittel wirkende Kraft wirkt einer Betätigung des Stellmittels durch den Bediener entgegen, wenn die Verstellung der Antriebseinheit der Auslenkung des Stellmittels hinterher eilt, wodurch die Antriebseinheit dem vorgewählten Wert an dem Stellmittel immer folgen kann.

Das Steuerungssystem kann somit über die Steuerungseinheit und deren Sensor die Abweichung des Stellmittels erkennen und über die in der Steuerungseinheit hinterlegten Kennlinie der Antriebseinheit einen Wert ermitteln und mit diesem Wert auf die Aktuatoreinheit einwirken. Die Wirkung der Aktuatoreinheit mittels der physikalischen Größe der Kraft und die des Sensors mittels des Weges auf die Steuerungseinheit stellt eine Kopplung dar, die eine geschlossene Wirkungskette ergibt. Die Rückkopplung führt zu dem Effekt, dass das Stellmittel in Abhängigkeit von den Beschleunigungsverhältnissen an der Antriebseinheit schwer- oder leichtgängiger verstellbar ist. Die Leicht- beziehungsweise Schweirgängigkeit wird somit vom Beschleunigungsverhalten der Antriebseinheit bestimmt. Die Betätigung des Stellmittels durch den Bediener wird umso schwergängiger, je näher die Antriebseinheit an ihre Elastizitätsgrenze gelangt, d.h. dass der sich aus der Auslenkung des Stellmittels ergebende kinematische Parameter und die Rückmeldung an das Stellmittel über den Regelkreis Kennlinien gesteuert sind. Hierdurch wird dem Bediener beim Betätigen des Stellmittels eine Rückmeldung entsprechendes Bediengefühl vermittelt. Die Betätigung des Stellmittels korrespondiert mit der möglichen Beschleunigung der Antriebseinheit, sodass die Antriebseinheit dem vorgegebenen Wert der Sollgröße aus der Verstellung des Stellmittels folgen kann,
Aufgrund der haptischen Rückmeldung am Stellmittel kann der Bediener zu jedem Zeitpunkt feststellen, inwieweit die vorgewählte Einstellung vom Antriebssystem erreicht wurde oder nicht.

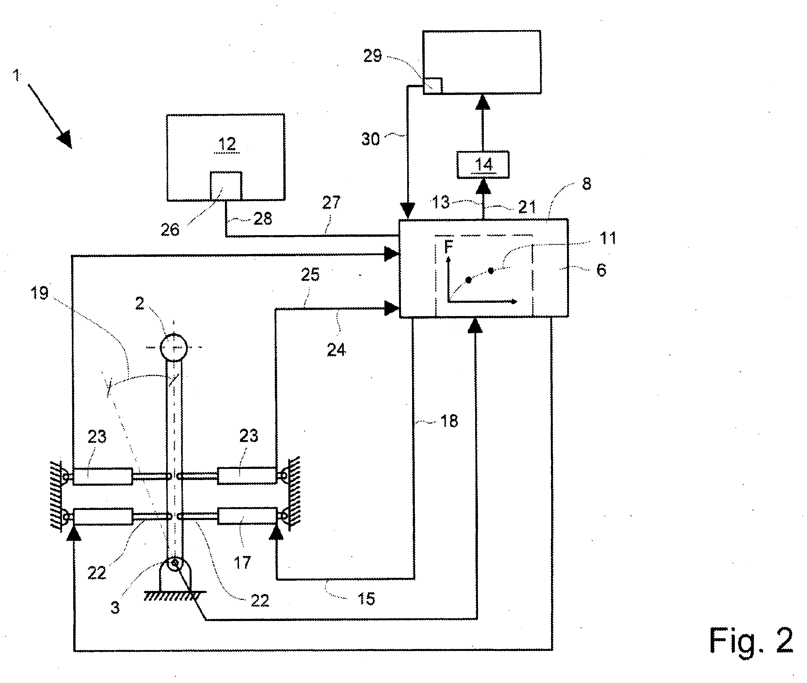

Bei einer weiteren vorteilhaften Ausführung eines Steuerungssystems für die Antriebseinrichtungen einer selbstfahrenden Landmaschine ist die Antriebseinheit als hydraulischer Fahrantrieb ausgeführt. Das Beschleunigungsverhalten des Fahrantriebes resultiert hier aus den Antriebseinrichtungen der Antriebseinheit und der Hydraulikpumpe, wodurch ein erweiterter Regelkreis für die Bestimmung eines Rückmeldesignals an das Stellmittel erforderlich ist. Vorteilhafterweise sind an dem Stellmittel mindestens eine Aktuatoreinheit, vorzugsweise zwei Aktuatoreinheiten angeordnet, welche der Auslenkung des Stellmittels durch den Bediener entgegenwirken und mindestens ein Kraftsensor, vorzugsweise zwei Kraftsensoren, welche die Kraft, die der Bediener zur Verstellung des Stellwinkels anwendet, erfassen. Weitere Beschreibungen zu der vorteilhaften Ausführung können der Fig. 2 entnommen werden.

Ausführungsbeispiele der Erfindung sind in den Zeichnungen rein schematisch dargestellt und werden nachfolgend näher beschrieben. Es zeigten:
- Fig. 1: ein blockschaltbildartig dargestelltes Steuerungssystem für eine Antriebseinheit einer selbstfahrenden Landmaschine und
- Fig. 2: eine alternative Ausführungsform eines Steuerungssystems.

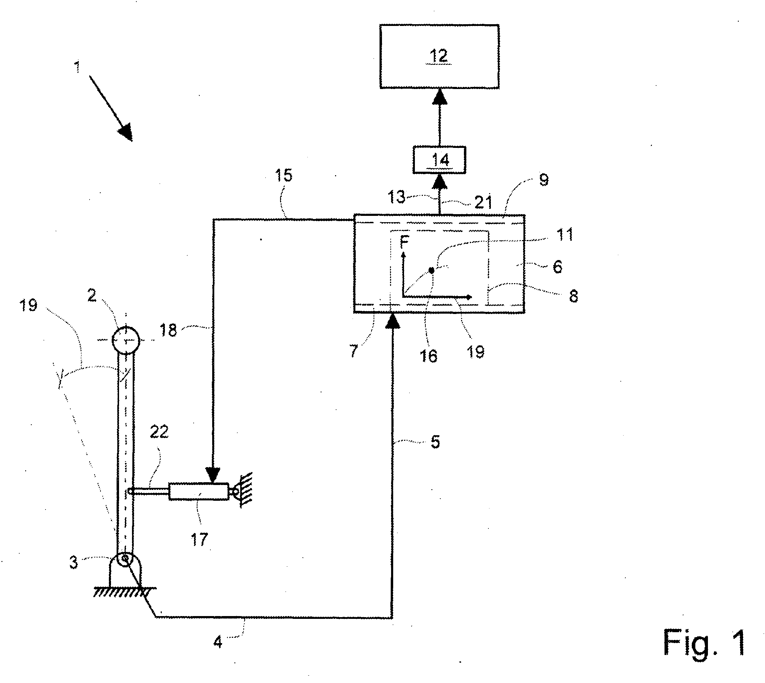

Fig. 1 zeigt blockschaltbildartig ein Steuerungssystem 1, wobei das Steuerungssystem 1 zum Steuern und Regeln des Fahrbetriebs einer selbstfahrenden Landmaschine geeignet ist, die im wesentlichen aus einem Stellmittel 2 mit mindestens einem am Stellmittel 2 angeordneten Sensor 3, mit mindestens einer Datenleitung 4 zur Übertragung von Signalen 5 an die Steuerungseinheit 6, bestehend aus einem Eingangs-7, einem Verarbeitungs-8 und Ausgangsteil 9, mit mindestens einem gespeicherten Programm 10, welches die Daten mindestens einer Kennlinie 11 einer Antriebseinheit 12 beinhaltet, mit mindestens einer Datenleitung 13 zum Stellglied 14, welches die Antriebseinheit 12, steuert, mit mindestens einer Datenleitung 15 zur Weiterleitung des Aktuatorkraftwertes 16 an die mindestens eine Aktuatoreinheit 17, die am Stellmittel 2 angeordnet ist, besteht.
Die Aufgabe des Steuerungssystems 1 besteht darin, die Bewegung des Stellmittels 2, die eine Auslenkung 19 des Fahrhebels 2 durch die Betätigung des Bedieners darstellt, zu erfassen. Aus dem erfassten Wert beziehungsweise den erfassten Werten wird in der Steuerungseinheit 6 mit den gespeicherten Daten einer Leistungskurve 11 im Verarbeitungsteil 8 ein kinematischer Parameter 21 bestimmt, mit der die Antriebseinheit 12 über ein Stellglied 14 gesteuert wird Das Stellglied 14 beeinflusst die Kraftstoffzufuhr für die Antriebseinheit 12. Die Steuerung der Antriebseinheit besteht darin, die Motordrehzahl zu verändern. Der Sensor 3, die Steuerungseinheit 6 und die Aktuatoreinheit 17 stellen einen Regelkreis 18 dar, der aus der Bewegung, beziehungsweise der Auslenkung 19 des Stellmittels 2 eine haptische Rückmeldung 22 an das Stellmittel 2 erzeugt, um dem Bediener am Stellmittel 2 ein realistisches und gewohntes Bediengefühl bzgl. des Beschleunigungs- und Fahrverhaltens der Antriebseinheit 12 zu vermitteln. Dazu ist am Stellmittel 2 mindestens eine Aktuatoreinheit 17 angeordnet, die aktiv Kräfte auf das Stellmittel 2 ausübt Die Aktuatoreinheit 17 stellt das Bindeglied zwischen dem steuerungstechnischen und prozesstechnischen Einrichtungen her. Die Aktuatoreinheit 17 kann aus verschiedenen Antriebselementen gebildet sein, vorzugsweise einem Elektromotor, wobei die Kräfte aus der haptischen Rückmeldung 22 auch durch hydraulische oder pneumatische Elemente erzeugt werden können. Das Stellmittel 2 ist vorzugsweise ein Fahr- oder Multifunktionshebel zur Einstellung des Fahrbetriebes beziehungsweise der Fahrgeschwindigkeit der selbstfahrenden Landmaschinen.
Eine alternative Ausführungsform eines Steuerungssystems 1 wird anhand einer skizzenhaften Darstellung in der Fig. 2 dargestellt, das weitestgehend mit dem Verfahren und Steuerungssystem entsprechend der Fig. 1 übereinstimmt. Die vorteilhafte Ausführung dieses Steuerungssystems 1 mit haptischer Rückmeldung 22 besteht darin, dass weitere Bindeglieder, bestehend aus Sensoren, zwischen der steuerungstechnischen Steuereinheit 6 und den prozesstechnischen Einrichtungen, wie dem Stellmittel 2 und der Antriebseinheit 12 angeordnet sind, wobei die Sensoren die Prozesszustände in Informationen umwandeln und der Steuerungseinheit 6 zur weiteren Verarbeitung zuführen, um daraus eine haptische Rückmeldung 22 für das Stellmittel 2 zu generieren. Bei dem mindestens einen Sensor 23 handelt es sich um einen Kraftsensor 23, der die bei der Auslenkung 19 des Stellmittels 2 durch den Bediener aufgebrachte Kraft ermittelt und den Wert des Kraftsignals 24 über eine Datenleitung 25 der Steuereinheit 6 zur Auswertung im Verarbeitungsteil 8 zur Verfügung stellt, Ein anderer Sensor 26 ist an der Antriebseinheit 12 angeordnet und erfasst den Istwert der Drehzahl der Antriebseinheit 12 und leitet den ermittelten Wert des Drehzahlsignals 27 über die Datenleitung 28 ebenfalls der Steuereinheit 6 zu. Aus dem Sollwert des Sensors 3, dem Istwert des Sensors 26 und der Information des Sensors 23 wird im Verarbeitungsteil 8 der Steuerungseinheit 6 eine Rückmeldung 22, bestehend aus einem Aktuatorkraftwert 16 ermittelt und über die Datenleitung 15 den Aktuatoreinheiten 17 zur Verfügung gestellt. Die Sensoren 3, 23, 26, die Steuerungseinheit 6 und die Aktuatoreinheiten 17 bilden einen Regelkreis 18, der aus der Bewegung beziehungsweise der Auslenkung 19 des Stellmittels 2 eine haptische Rückmeldung an diesen erzeugt, um dem Bediener am Stellmittel 2, wie bei dem Steuerungssystem nach Fig. 1 ein realistisches und gewohntes Bediengefühl bezüglich des Beschleunigungs - und Fahrverhaltens der Antriebseinheit 12 zu vermitteln, Weicht der ermittelte Istwert von dem vorgegebenen Sollwert ab, wirkt eine durch die Aktuatoreinheiten 17 erzeugte Kraft der vom Bediener am Stellmittel 2 aufgebrachten Kraft entgegen Je größer die Abweichung zwischen dem ermittelten Ist- und Sollwert ist, desto größer ist die von den Aktuatoreinheiten 17 aktivierte Kraft. Nähert sich die Drehzahl der Antriebseineinheit 12 dem vorgegebenen Sollwert des Stellmittels 2 an, nimmt die aktivierte Kraft der Aktuatoreinheiten 17 ab, bis der Istwert mit dem Sollwert übereinstimmt oder eine weitere Verstellung des Stellmittels 2 durch den Bediener während des Fahrbetriebes erfolgt.
Des weiteren besteht die Möglichkeit bei hydraulischen Fahrantrieben das Beschleunigungsverhalten auch der Hydraulikpumpe mit einem Sensor 29 zu erfassen und die Information ebenfalls der Steuerungseinheit 6 über die Datenleitung 30 zur Auswertung und Berechnung eines Aktuatorkraftsignals 16 zur Verfügung zu stellen beziehungsweise mit den Informationen der anderen Sensoren 3,23,26 zu verknüpfen und daraus abgeleitet ein Aktuatorkraftsignal 16 zu generieren. Der Regelkreis für die Ermittlung der Haptischen Rückmeldung wird somit aus den Sensoren 3,23,26 und 29 und den Aktuatoreinheiten 17 gebildet

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Steuerungssystem
- 2: Stellmittel
- 3: Sensor
- 4: Datenleitung
- 5: Signal
- 6: Steuerungseinheit
- 7: Eingangsteil
- 8: Verarbeitungsteil
- 9: Ausgangsteil
- 10: Programm
- 11: Kennlinie
- 12: Antriebseinheit
- 13: Datenleitung
- 14: Stellglied
- 15: Datenleitung
- 16: Aktuatorkraftwert
- 17: Aktuatoreinheit
- 18: Regelkreis
- 19: Auslenkung
- 20: Leistung
- 21: Kinematischer Parameter
- 22: Rückmeldung
- 23: Sensor (Kraft)
- 24: Kraftsignal
- 25: Datenleitung
- 26: Sensor (Drehzahl)
- 27: Drehzahlsignal
- 28: Datenleitung
- 29: Sensor
- 30: Datenleitung

## Patentansprüche

1. Steuerungssystem mit einem Stellmittel (2) zur Änderung eines kinematischen Parameters (21) einer Antriebseinheit (12) einer selbstfahrenden Landmaschine,
**dadurch gekennzeichnet,**
**dass** die Verstellbarkeit des Stellmittels (2) an das Beschleunigungsverhalten der Antriebseinheit (12) gekoppelt ist.

2. Steuerungssystem nach Anspruch 1,
**dadurch gekennzeichnet,**
**dass** dem Stellmittel (3) ein Sensor (2) zur Ermittlung der Auslenkung (19) des Stellmittels (2) zugeordnet ist.

3. Steuerungssystem nach Anspruch 2,
**dadurch gekennzeichnet,**
**dass** der Sensor (3) die Auslenkung (19) des Stellmittels (2) in eine Information wandelt und an eine Steuerungseinheit (6) übermittelt

4. Steuerungssystem nach wenigstens einem der vorhergehenden Anspruche,
**dadurch gekennzeichnet,**
**dass** die Steuerungseinheit (6) wenigstens eine Kennlinie (11) der Antriebseinheit (12) enthält.

5. Steuerungssystem nach Anspruch 4,
**dadurch gekennzeichnet,**
**dass** die Kennlinie (11) die Daten des Beschleunigungsverhaltens der Antriebseinheit (12) beinhaltet.

6. Steuerungssystem nach Anspruch 5,
**dadurch gekennzeichnet,**
**dass** das Beschleunigungsverhalten der Antriebseinheit (12) durch dessen Elastizität bestimmt wird.

7. Steuerungssystem nach Anspruch 4,
**dadurch gekennzeichnet,**
**dass** die Information über die Auslenkung (19) des Stellmittels (2) der Kennlinie (11) der Antriebseinheit (12) zugeordnet werden.

8. Steuerungssystem nach Anspruch 7,
**dadurch gekennzeichnet,**
**dass** abhängig von der Information der Auslenkung (19) des Stellmittels (2) wenigstens eine Sollgröße des kinematischen Parameters (21) aus der Kennlinie (11) ermittelt wird.

9. Steuerungssystem nach Anspruch 8,
**dadurch gekennzeichnet**
**dass** der Sollgröße des kinematischen Parameters (21) ein zugehöriger, aus der Kennlinie (11) vorgegebener Aktuatorkraftwert (16) zugeordnet wird.

10. Steuerungssystem nach Anspruch 9,
**dadurch gekennzeichnet,**
**dass** aus dem Aktuatorkraftwert (16) ein Kraftsignal (24) generiert wird, welches an mindestens eine Aktuatoreinheit (17) übermittelt wird.

11. Steuerungssystem nach Anspruch 10,
**dadurch gekennzeichnet,**
**dass** mittels der Aktuatoreinheit (17) eine Rückmeldung (22) an das Stellmittel (2) erzeugt wird.

12. Steuerungssystem nach wenigstens einem der Ansprüche 10 oder 11,
**dadurch gekennzeichnet,**
**dass** die Aktuatoreinheit (17), abhängig vom Kraftsignal (24), eine Kraft auf das Stellmittel (2) ausübt, die der Auslenkung (19) des Stellmittels (2) durch den Bediener entgegengerichtet ist.

13. Steuerungssystem nach Anspruch 1 bis 12,
**dadurch gekennzeichnet,**
**dass** die Kopplung des Stellmittels (2) mit dem Sensor (3) über die Steuerungseinheit (6) und der Aktuatoreinheit (17) eine geschlossene Wirkungskette ergibt.

14. Steuerungssystem nach wenigstens einem der vorhergehenden Ansprüche,
**dadurch gekennzeichnet,**
**dass** die Betätigung des Stellmittels (2) umso schwergängiger wird, desto naher die Antriebseinheit (12) an ihre Elastizitätsgrenze gelangt

15. Steuerungssystem nach wenigstens einem der vorhergehenden Ansprüche,
**dadurch gekennzeichnet,**
**dass** die Beweglichkeit des Stellmittels (2) mit der möglichen Beschleunigung der Antriebseinheit (12) korrespondiert, so dass die Antriebseinheit (12) der Verstellung des Stellmittels (2) folgen kann.

16. Steuerungssystem nach einem der Ansprüche 10 bis 13,
**dadurch gekennzeichnet,**
**dass** die Aktuatoreinheit (17) aus einem Elektromotor besteht

17. Steuerungssystem nach wenigstens einem der Ansprüche 10 bis 13,
**dadurch gekennzeichnet,**
**dass** die Aktuatoreinheit (17) aus hydraulischen oder pneumatischen Elementen besteht.

18. Steuerungssystem nach Anspruch 1,
**dadurch gekennzeichnet,**
**dass** das Stellmittel (2) ein Fahrhebel ist

## Claims

1. A control system having a setting means (2) for altering a kinematic parameter (21) of a drive unit (12) of a self-propelled agricultural machine,
**characterised in that** the displaceability of the setting means (2) is coupled to the acceleration performance of the drive unit (12).

2. A control system according to claim 1 **characterised in that** associated with the setting means (3) is a sensor (2) for ascertaining the deflection (19) of the setting means (2).

3. A control system according to claim 2 **characterised in that** the sensor (3) converts the deflection (19) of the setting means (2) into an item of information and communicates same to a control unit (6).

4. A control system according to at least one of the preceding claims **characterised in that** the control unit (6) includes at least one characteristic (11) of the drive unit (12).

5. A control system according to claim 4 **characterised in that** the characteristic (11) includes the data of the acceleration performance of the drive unit (12).

6. A control system according to claim 5 **characterised in that** the acceleration performance of the drive unit (12) is determined by the elasticity thereof.

7. A control system according to claim 4 **characterised in that** the information about the deflection (19) of the setting means (2) is associated with the characteristic (11) of the drive unit (12).

8. A control system according to claim 7 **characterised in that** in dependence on the information in respect of the deflection (19) of the setting means (2) at least one reference value of the kinematic parameter (21) is ascertained from the characteristic (11).

9. A control system according to claim 8 **characterised in that** associated with the reference value of the kinematic parameter (21) is an associated actuator force value (16) predetermined from the characteristic (11).

10. A control system according to claim 9 **characterised in that** a force signal (24) is generated from the actuator force value (16) and is communicated to at least one actuator unit (17).

11. A control system according to claim 10 **characterised in that** a feedback (22) to the setting means (2) is generated by means of the actuator unit (17).

12. A control system according to at least one of claims 10 and 11 **characterised in that** in dependence on the force signal (24) the actuator unit (17) exerts a force on the setting means (2) which is in opposite relationship to the deflection (19) of the setting means (2) by the operator.

13. A control system according to claims 1 to 12 **characterised in that** coupling of the setting means (2) to the sensor (3) by way of the control unit (6) and the actuator unit (17) affords a closed operating chain.

14. A control system according to at least one of the preceding claims **characterised in that** actuation of the setting means (2) becomes correspondingly more difficult to implement, the closer the drive unit (12) approaches its elasticity limit.

15. A control system according to at least one of the preceding claims **characterised in that** the mobility of the setting means (2) corresponds to the possible acceleration of the drive unit (12) so that the drive unit (12) can follow the displacement of the setting means (2).

16. A control system according to one of claims 10 to 13 **characterised in that** the actuator unit (17) comprises an electric motor.

17. A control system according to at least one of claims 10 to 13 **characterised in that** the actuator unit (17) comprises hydraulic or pneumatic elements.

18. A control system according to claim 1 **characterised in that** the setting means (2) is a travel lever.

## Revendications

1. Système de commande comprenant un organe de commande (2) pour modifier un paramètre cinématique (21) d'une unité d'entraînement (12) d'une machine agricole automotrice, **caractérisé en ce que** la possibilité de déplacement de l'organe de commande (2) est couplée au comportement d'accélération de l'unité d'entraînement (12).

2. Système de commande selon la revendication 1, **caractérisé en ce qu'**un capteur (2) pour déterminer la déviation (19) de l'organe de commande (2) est associé à l'organe de commande (3).

3. Système de commande selon au moins une des revendications précédentes, **caractérisé en ce que** le capteur (3) convertit la déviation (19) de l'organe de commande (2) en une information et transmet celle-ci à une unité de commande (6).

4. Système de commande selon au moins une des revendications précédentes, **caractérisé en ce que** l'unité de commande (6) contient au moins une courbe caractéristique (11) de l'unité d'entraînement (12).

5. Système de commande selon la revendication 4, **caractérisé en ce que** la courbe caractéristique (11) contient les données du comportement d'accélération de l'unité d'entraînement (12).

6. Système de commande selon la revendication 5, **caractérisé en ce que** le comportement d'accélération de l'unité d'entraînement (12) est déterminé par son élasticité.

7. Système de commande selon la revendication 4, **caractérisé en ce que** l'information sur la déviation (19) de l'organe de commande (2) est associée à la courbe caractéristique (11) de l'unité d'entraînement (12).

8. Système de commande selon la revendication 7, **caractérisé en ce que**, en fonction de l'information de la déviation (19) de l'organe de commande (2), au moins une grandeur théorique du paramètre cinématique (21) est déterminée à partir de la courbe caractéristique (11).

9. Système de commande selon la revendication 8, **caractérisé en ce qu'**à la grandeur théorique du paramètre cinématique (21) est associée une valeur de force d'actionnement (16) correspondante, prédéfinie par la courbe caractéristique (11).

10. Système de commande selon la revendication 9, **caractérisé en ce qu'**à partir de la valeur de force d'actionnement (16) est généré un signal de force (24) qui est transmis à au moins une unité d'actionnement (17).

11. Système de commande selon la revendication 10, **caractérisé en ce qu'**au moyen de l'unité d'actionnement (17) est généré un retour d'information (22) à l'organe de commande (2).

12. Système de commande selon au moins une des revendications 10 ou 11, **caractérisé en ce que** l'unité d'actionnement (17) exerce sur l'organe de commande (2), en fonction du signal de force (24), une force qui est dirigée en sens inverse de la déviation (19) de l'organe de commande (2) par l'opérateur.

13. Système de commande selon l'une des revendications 1 à 12, **caractérisé en ce que** le couplage de l'organe de commande (2) avec le capteur (3) par l'intermédiaire de l'unité de commande (6) et de l'unité d'actionnement (17) crée une chaîne fonctionnelle fermée.

14. Système de commande selon au moins une des revendications précédentes, **caractérisé en ce que** l'actionnement de l'organe de commande (2) devient d'autant plus dur que l'unité d'entraînement (12) se rapproche de sa limite d'élasticité.

15. Système de commande selon au moins une des revendications précédentes, **caractérisé en ce que** la possibilité de déplacement de l'organe de commande (2) correspond à l'accélération possible de l'unité d'entraînement (12), de sorte que l'unité d'entraînement (12) peut suivre le déplacement de l'organe de commande (2).

16. Système de commande selon des revendications 10 à 13, **caractérisé en ce que** l'unité d'actionnement (17) est formée par un moteur électrique.

17. Système de commande selon au moins une des revendications 10 à 13, **caractérisé en ce que** l'unité d'actionnement (17) est formée d'éléments hydrauliques ou pneumatiques.

18. Système de commande selon la revendication 1, **caractérisé en ce que** l'organe de commande (2) est un levier de marche.
